# EUROPÄISCHE PATENTSCHRIFT

(11) **EP 1 620 248 B1**
(45) Veröffentlichungstag und Bekanntmachung des Hinweises auf die Patenterteilung: **06.06.2007**
(21) Anmeldenummer: 04727551.6
(22) Anmeldetag: 15.04.2004
(51) Int. Cl.: B29C 47/90

(54) **STUFENLOS EINSTELLBARE KALIBRIERHÜLSE FÜR EXTRUDIERTE KUNSTSTOFFSTRÄNGE, INSBESONDERE KUNSTSTOFFROHRE**
INFINITELY ADJUSTABLE CALIBRATING SHELL FOR CONTINUOUS EXTRUDED PLASTIC PARTS, ESPECIALLY PLASTIC PIPES
MANCHON DE CALIBRAGE REGLABLE EN CONTINU DESTINE A DES BARRES PLASTIQUES EXTRUDEES, NOTAMMENT A DES TUBES PLASTIQUES

(30) Priorität: 17.04.2003 DE 10318137
(43) Veröffentlichungstag der Anmeldung: 01.02.2006
(73) Patentinhaber: INOEX GmbH, 32547 Bad Oeynhausen (DE); Schulze, Torsten, 32549 Bad Oeynhausen (DE)
(72) Erfinder: SCHMUHL, Jörg, 15711 Königs Wusterhausen (DE)
(74) Vertreter: Seewald, Jürgen
(86) Internationale Anmeldenummer: PCT/EP2004/003966
(87) Internationale Veröffentlichungsnummer: WO 2004/091891

(56) Entgegenhaltungen:
- US-A- 2 981 975
- US-A- 3 600 488
- US-A- 4 655 988

## Beschreibung

Die Erfindung betrifft eine stufenlos einstellbare Kalibrierhülse für extrudierte Kunststoffstränge, insbesondere Kunststoffrohre, mit einem ausziehbaren Mittelstück, das von einem Satz am Kunststoffstrang anliegender und schräg zur Achse der Kalibrierhülse verlaufender, flexibler Bänder gebildet wird und dessen Bänder in ihrem gegenseitigen Abstand einstellbar sind.

In Extrudieranlagen für Kunststoffstränge, insbesondere Kunststoffrohre, ist in Produktionsrichtung hinter dem Extruder mit seinem Extrudierwerkzeug eine Kühlstrecke aus mehreren Kühlkammern angeordnet. Der Eingang der ersten, unter Unterdruck stehenden Kühlkammer wird von einer Kalibrierhülse gebildet, in der der Kunststoffstrang in seinen Außenmaßen auf Sollmaß kalibriert wird. Der aus dem Extrudierwerkzeug in warmem und damit noch verformbarem Zustand mit Übermaß kommende Kunststoffstrang wird in der Kalibrierhülse auf das Sollmaß reduziert. Dies geschieht dadurch, dass der Unterdruck in der Kühlkammer den Strang, insbesondere das Kunststoffrohr, über in der Kalibrierhülse vorgesehene Durchbrüche an die Innenwand der Kalibrierhülse zieht.

Um in ein und derselben Extrudieranlage Kunststoffstränge mit unterschiedlichen Ausmaßen, insbesondere Außendurchmesser produzieren zu können, ist es bekannt, entweder die Kalibrierhülse auszuwechseln oder eine Kalibrierhülse einzusetzen, deren Durchmesser stufenlos einstellbar ist. Mit den meisten bekannten stufenlos einstellbaren Kalibrierhülsen lassen sich jedoch keine kreisförmigen Querschnitte erzielen, weil sich die Kalibrierhülse aus Segmenten zusammensetzt. Darüber hinaus ist der Stellbereich solcher Kalibrierhülsen verhältnismlißig klein (DE 198 43 340 A1, DE 200 00 872 U1, DE 200 23 052 U1, EP 11 57 805 A1).

Mit einer anderer bekannten, stufenlos einstellbaren Kalibrierhülse (DE 44 08 064 C1) ist ein absolut kreisförmiger Querschnitt des extrudierten Stranges erreichbar, Bei dieser Kalibrierhülse besteht das Mittelstück aus in Form eines zweigängigen Gewindes mit großer Steigung gewickelten Bändern. Durch Verdrehen der beiden Enden dieses Mittelstückes gegeneinander lässt sich dessen Innendurchmesser nur in engen Grenzen verändern. Gegen seitliches Ausweichen sind die Windungen des Bandes durch parallel zur Kalibrierhülse angeordnete Stützschienen gesichert, die vorzugsweise in Umfangsrichtung der Kalibrierhülse flexibel ausgebildet sind. Solche Stützschienen schränken den Stellweg der Kalibrierhülse ein. Nachteilig ist ferner, dass die Kalibrierhülse keine hohe Eigensteifigkeit hat, weshalb unbedingt die endseitigen ringförmigen Köpfe über mehrere Stützrohre miteinander verbunden sein müssen.

Die US 4 655 988 beschreibt eine stufenlos einstellbare Kalibrierhülse für Blasfolien. Diese Kalibrierhülse weist einen Satz von flexiblen Luftschläuchen auf, die am extrudierten Kunststoffstrang anliegen und schräg zur Achse der Kalibrierhülse angeordnet sind, wobei der Abstand zwischen den Luftschläuchen einstellbar ist. Die Luftschläuche besitzen Luftansaugöffnungen, durch die die Blasfolie umgebende Luft angesaugt wird, so dass der an der Blasfolie anliegende Unterdruck oder Sog ausgeglichen wird. Die Luftschläuche sind an ihrem einen Ende gelenkig an einen oberen Drehring angeschlagen und an ihrem unteren Ende ortsfest aber drehbar in einem Haltering angeordnet, der den oberen Drehring drehbar aufnimmt, Durch eine Vielzahl von parallel zueinander angeordneten Luftschläuchen wird etwa mittig zwischen dem oberen Drehring und dem Lagerring ein Hüllkreis gebildet, der die extrudierte Blasfolie umgibt. Der Durchmesser des Hüllkreises wird durch entsprechendes relatives Verdrehen des oberen Drehrings gegenüber dem Haltering verändert. Dabei Vertwisten sich die Luftschläuche mehr oder weniger. Diese bekannte Kalibrierhülse besitzt ebenfalls keine große Eigensteifigkeit.

In der US 2 981 975 ist eine Kalibrierhülse offenbart, die aus flexiblen, sich kreuzenden Bändern aufgebaut ist. Jedoch sind diese Bänder nicht miteinander gelenkig verbunden. Zudem ist diese Kalibrierhülse nicht stufenlos auf den Durchmesser eines extrudierten Kunststoffstranges einstellbar.

Der Erfindung liegt die Aufgabe zugrunde, eine stufenlos einstellbare Kalibrierhülse der eingangs genannten Art zu schaffen, die einen großen Stellbereich und eine hohe Eigensteifigkeit hat.

Diese Aufgabe wird bei einer Kalibrierhülse der eingangs genannten Art dadurch gelöst, dass die Bänder des einen Satzes sich mit flexiblen Bändern eines anderen Satzes nach Art eines axial ausziehbaren Scherengitters kreuzen und an Kreuzungspunkten dieses Scherengitters miteinander gelenkig verbunden sind. Vorzugsweise fluchten dabei einerseits die gruppenweise achsparallelen Kreuzungspunkte in jeder Auszugsstellung der Kalibrierhülse, während andererseits die gruppenweise in Radialebenen liegenden Kreuzungspunkte in jeder Auszugsstellung der Kalibrierhülse in ihrer jeweiligen Radialebene verbleiben.

Die erfindungsgemäße, auch im Betrieb stufenlos einstellbare Kalibrierhülse zeichnet sich durch einen großen Stellbereich bei hoher Eigensteifigkeit aus. Die Vielzahl der sich kreuzenden, miteinander gekoppelten Bänder garantiert eine absolut kreisrunde Form bei jedem eingestellten Durchmesser. Wegen der Ausbildung als ausziehbares Scherengitter, das zu einer Hülse geformt ist, hat die Kalibrierhülse eine hohe Eigensteifigkeit, so dass sie im einfachsten Fall nicht einmal abgestützt oder geführt zu werden braucht. Der Stellbereich der Kalibrierhülse ergibt sich aus der Summe der Breite der Einzelbänder sowie dem Umfang in ihrem Befestigungsbereich. Um einen möglichst großen Stellbereich zu erhalten, sollte der Umfang der Köpfe im Befestigungsbereich der Bänder 40% bis 60% der Summe der Breite aller Bänder betragen. Der Stellbereich kann auch über den Neigungswinkel der Bänder zur zentralen Achse der Kalibrierhülse definiert werden. Er sollte zwischen 15° und 75° liegen.

Das Mittelstück kann über mehr oder weniger konische, aus Bändern bestehende Übergangsabschnitte beweglich an ringförmigen Köpfen befestigt sein. Nach einer konstruktiv einfachen Ausgestaltung der Erfindung sind allerdings die Enden der Bänder des einen Satzes beweglich, insbesondere gelenkig an ringförmige Köpfe angeschlossen und bilden Übergangsabschnitte zwischen den ringförmigen Köpfen und dem Mittelstück, die in Abhängigkeit vom Auszugsgrad des Mittelstückes mehr oder weniger konisch sind.

Grundsätzlich können die Bänder des Mittelstückes sich nur über einige wenige Kreuzungspunkte erstrecken. Vorzugsweise erstrecken sich jedoch alle flexiblen Bänder über die gesamte Länge des Mittelstückes und sind zugfest. Diese Ausbildung ist nicht nur konstruktiv einfach, sondern auch formsteif.

Obwohl die gelenkige Verbindung der gegensinnig verlaufenden Bändern vorzugsweise in allen Kreuzungs-/Gelenkpunkten schon für eine ausreichende Eigensteifigkeit bei leichter Ausziehbarkeit des bandförmigen Mittelsstückes sorgt, kann es dennoch günstig sein, an mindestens einer Reihe von Gelenken (12) zwischen den sich kreuzenden Bändern, die in einer Axialebene der Kalibrierhülse liegen, Führungselemente (13) anzubringen, die in einer Axialführung (14) verschieblich gelagert sind.

Die stufenlose Einstellung des Durchmessers kann im einfachsten Fall von Hand dadurch erfolgen, dass die ringförmigen Köpfe in ihrem Abstand verändert werden.

Vorzugsweise ist dafür jedoch ein mechanischer, insbesondere motorisch angetriebener Auszug vorgesehen.

Wie schon ausgeführt, hat das ausziehbare Mittelstück der Kalibrierhülse eine hohe Eigensteifigkeit. Da die Kalibrierhülse aber insbesondere bei durchlaufendem Strang ein großes Gewicht hat, ist es zur Entlastung der Gelenkpunkte vorteilhaft, ihr eine höhenverstellbare Abstützung zuzuordnen.

Im folgenden wird die Erfindung anhand einer ein Ausführungsbeispiel darstellenden Zeichnung näher erläutert. Im einzelnen zeigen:
- Fig. 1: eine Kalibrierhülse in einer ersten Einstellung in Seitenansicht,
- Fig. 2: die Kalibrierhülse gemäß Fig. 1 im Querschnitt nach Linie II-II der Fig. 1 und
- Fig. 3: die Kalibrierhülse gemäß Fig. 1 in einer zur Fig. 2 anderen Einstellung.

Die Kalibrierhülse besteht im wesentlichen aus einem im Durchmesser stufenlos einstellbaren Mittelstück 1 und ringförmigen Köpfen 2, 3. Zwischen den endseitigen Köpfen 2, 3 ist ein motorischer Längenauszug 4 wirksam. Das Mittelstück 1 ruht auf einer höhenverstellbaren Stützvorrichtung 5.

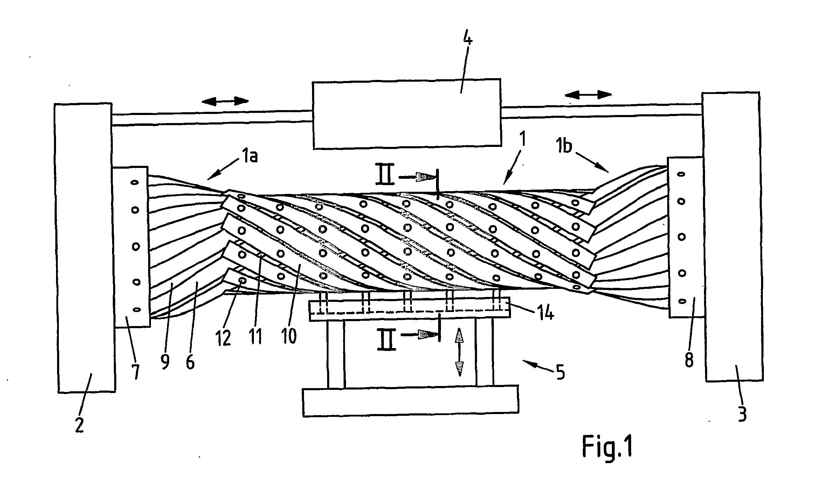

Das Mittelstück 1 besteht aus zwei Sätzen von nach Art eines Scherengitters sich kreuzenden und an den Kreuzungspunkten gelenkig miteinander verbundenen, flachen Bändern 6, 10 insbesondere aus Stahlblech. Die scherengitterartig verbundenen Bänder 6, 10 sind zu einer Hülse geformt. Die Summe der Breite dieser Bänder 6 im Anschlussbereich 7, 8 der ringförmigen Köpfe 2, 3 macht etwa 40% bis 60% des Umfangs des Anschlussbereiches 7, 8 aus, so dass in der in Fig. 1 dargestellten Stellung in den hier einen Einlauf- und Auslaufkonus bildenden Übergangsbereichen 1a, 1b des Mittelstückes 1 Luftspalte 9 zwischen den Bändern 6 verbleiben. Während die Bänder 6 sich bis zu den Köpfen 2, 3 erstrecken, erstrecken sich die sie kreuzenden Bänder 10 nur im Bereich des Mittelstückes 1. In der in Fig. 1 darstellten Position weisen sie zwischen sich ebenfalls Luftspalte 11 auf. Der Fig. 1 ist ebenfalls zu entnehmen, dass jedes dieser Bänder 10 nicht an jedem Kreuzungspunkt mit den anderen Bändern 6 mittels eines Gelenkes gelenkig verbunden ist, sondern nur mit jedem zweiten Band 6. Darüber hinaus sind die Gelenke 12 benachbarter Bänder 10 um jeweils ein Band 6 gegeneinander versetzt. Die unteren Gelenke 12, die miteinander fluchten und parallel zur zentralen Achse liegen, weisen als Stifte ausgebildete Führungselemente 13 auf, die in einer Nutführung 14 der höhenverstellbaren Stützvorrichtung 5 geführt sind.

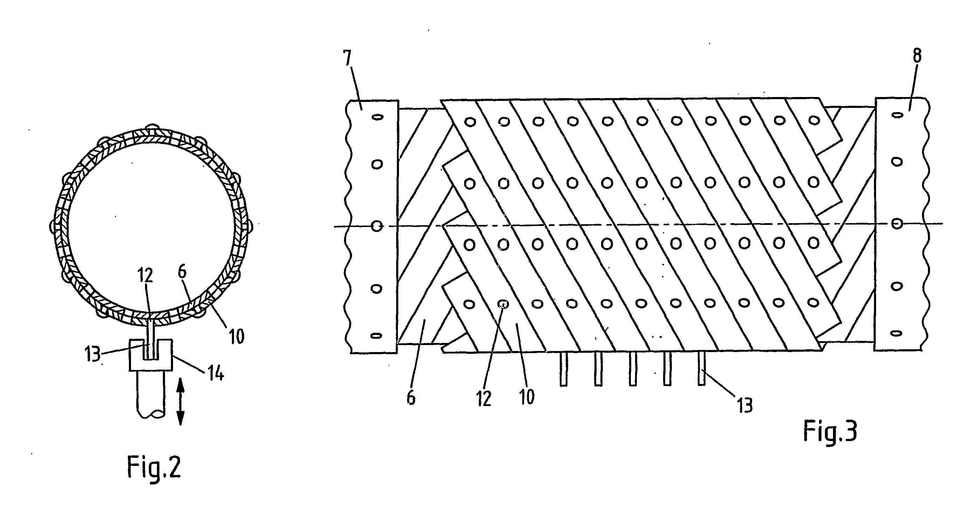

Aus der vergleichenden Darstellung der Figuren 1 und 3 für unterschiedliche Auszugspositionen der Kalibrierhülse sind in etwa die Grenzeinstellungen für den Durchmesserbereich zu entnehmen.

## Patentansprüche

1. Stufenlos einstellbare Kalibrierhülse für extrudierte Kunststoffstränge, insbesondere Kunststoffrohre, mit einem ausziehbaren Mittelstück, das von einem Satz am Kunststoffstrang anliegender und schräg zur Achse der Kalibrierhülse verlaufender, flexibler Bänder (6) gebildet wird und dessen Bänder (6) in ihrem gegenseitigen Abstand einstellbar sind,
**dadurch gekennzeichnet, dass** die Bänder (6) des einen Satzes sich mit flexiblen Bändern (10) eines anderen Satzes nach Art eines ausziehbaren Scherengitters kreuzen und an Kreuzungspunkten (12) und dieses Scherengitters miteinander gelenkig verbunden sind.

2. Kalibrierhülse nach Anspruch 1,
**dadurch gekennzeichnet, dass** einerseits die gruppenweise achsparallelen Kreuzungspunkte (12) in jeder Auszugsstellung der Kalibrierhülse fluchten und andererseits die gruppenweise in Radialebenen liegenden Kreuzungspunkte (12) in jeder Auszugsstellung der Kalibrierhülse in ihrer jeweiligen Radialebene verbleiben.

3. Kalibrierhülse nach Anspruch 1 oder 2,
**dadurch gekennzeichnet, dass** die Enden der Bänder (6) des einen Satzes beweglich, insbesondere gelenkig an ringförmige Köpfe (2, 3) angeschlossen sind und Übergangsabschnitte (1a, 1b) zwischen den ringförmigen Köpfen (2, 3) und dem Mittelstück (1) bilden, die in Abhängigkeit vom Auszugsgrad des Mittelstückes (1) mehr oder weniger konisch sind.

4. Kalibrierhülse nach einem der Ansprüche 1 bis 3,
**dadurch gekennzeichnet, dass** die flexiblen Bänder (6, 10) sich über die gesamte Länge des Mittelstückes (1) erstrecken.

5. Kalibrierhülse nach einem der Ansprüche 1 bis 4,
**dadurch gekennzeichnet, dass** die flexiblen Bänder (6, 10) zugfest sind.

6. Kalibrierhülse nach einem der Ansprüche 1 bis 5,
**dadurch gekennzeichnet, dass** der Neigungswinkel der Bänder (6, 10) zur zentralen Achse der Kalibrierhülse je nach Auszugsgrad des Mittelstücks (1) zwischen 30° und 75° einstellbar ist.

7. Kalibrierhülse nach einem der Ansprüche 1 bis 6,
**dadurch gekennzeichnet, dass** die Summe der Breite der Bänder (6) im Anschlussbereich (7, 8) der ringförmigen Köpfe (2, 3) 40% bis 60% des Umfangs dieses Anschlussbereiches (7, 8) ausmacht.

8. Kalibrierhülse nach einem der Ansprüche 1 bis 7,
**dadurch gekennzeichnet, dass** an mindestens einer Reihe von Gelenken (12) zwischen den sich kreuzenden Bändern (6, 10), die in einer Axialebene der Kalibrierhülse liegen, Führungselemente (13) angebracht sind, die in einer Axialführung (14) verschieblich gelagert sind.

9. Kalibrierhülse nach einem der Ansprüche 1 bis 8,
**dadurch gekennzeichnet, dass** zwischen den ringförmigen Köpfen (2, 3) ein Längenauszug (4) wirksam ist.

10. Kalibrierhülse nach einem der Ansprüche 1 bis 9,
**dadurch gekennzeichnet, dass** zwischen den ringförmigen Köpfen (2, 3) eine höhenverstellbare Stützvorrichtung (2, 3) dem ausziehbaren Mittelstück (1) der Kalibrierhülse zugeordnet ist.

## Claims

1. Infinitely adjustable calibrating sleeve for extruded strands of plastic, in particular plastic pipes, with an extendable central piece, which is formed by a set of flexible bands (6) lying against the strand of plastic and extending obliquely in relation to the axis of the calibrating sleeve, and the bands (6) of which can be adjusted in their mutual spacing, **characterized in that** the bands (6) of one set cross flexible bands (10) of another set in the manner of an extendable lattice gate and are connected to one another in an articulated manner at crossing points (12) of this lattice gate.

2. Calibrating sleeve according to Claim 1, **characterized in that** on the one hand the crossing points (12) that are axially parallel in groups are in line with one another in every extended position of the calibrating sleeve and on the other hand the crossing points (12) that lie in radial planes in groups remain in their respective radial plane in every extended position of the calibrating sleeve.

3. Calibrating sleeve according to Claim 1 or 2, **characterized in that** the ends of the bands (6) of one set are movably connected, in particular connected in an articulated manner, to annular heads (2, 3) and form transitional portions (1a, 1b) between the annular heads (2, 3) and the central piece (1) that are conical to a greater or lesser extent, in dependence on the degree to which the central piece (1) is extended.

4. Calibrating sleeve according to one of Claims 1 to 3, **characterized in that** the flexible bands (6, 10) extend over the entire length of the central piece (1).

5. Calibrating sleeve according to one of Claims 1 to 4, **characterized in that** the flexible bands (6, 10) are resistant to tension.

6. Calibrating sleeve according to one of Claims 1 to 5, **characterized in that**, depending on the degree to which the central piece (1) is extended, the angle of inclination of the bands (6, 10) in relation to the central axis of the calibrating sleeve is adjustable between 30° and 75°.

7. Calibrating sleeve according to one of Claims 1 to 6, **characterized in that** the sum of the widths of the bands (6) in the connection region (7, 8) of the annular heads (2, 3) makes up 40% to 60% of the circumference of this connection region (7, 8).

8. Calibrating sleeve according to one of Claims 1 to 7, **characterized in that** guiding elements (13), which are displaceably mounted in an axial guide (14), are attached on at least one row of articulations (12) between the crossing bands (6, 10) that lie in an axial plane of the calibrating sleeve.

9. Calibrating sleeve according to one of Claims 1 to 8, **characterized in that** a length extending mechanism (4) acts between the annular heads (2, 3).

10. Calibrating sleeve according to one of Claims 1 to 9, **characterized in that**, between the annular heads (2, 3), a height-adjustable supporting device (2, 3) is assigned to the extendable central piece (1) of the calibrating sleeve.

## Revendications

1. Manchon de calibrage à ajustement continu pour cordons en matière plastique extrudés, notamment des tubes en matière plastique, comprenant une pièce centrale étirable, qui est formée d'un jeu de bandes flexibles (6) s'appliquant contre le cordon en matière plastique et s'étendant obliquement par rapport à l'axe du manchon de calibrage, l'espacement mutuel entre les bandes (6) pouvant être ajusté,
**caractérisé en ce que**
les bandes (6) d'un jeu croisent des bandes flexibles (10) d'un autre jeu à la manière d'une grille à ciseaux étirable et sont connectées de manière articulée les unes aux autres au niveau des points d'intersection (12) de cette grille à ciseaux.

2. Manchon de calibrage selon la revendication 1,
**caractérisé en ce que**
d'une part, les points d'intersection (12) d'axes parallèles par groupes sont alignés dans chaque position d'étirage du manchon de calibrage, et d'autre part les points d'intersection (12) situés dans des plans radiaux par groupes restent dans chaque position d'étirage du manchon de calibrage dans leur plan radial respectif.

3. Manchon de calibrage selon la revendication 1 ou 2,
**caractérisé en ce que**
les extrémités des bandes (6) d'un jeu sont raccordées de manière mobile, notamment articulée, à des têtes annulaires (2, 3) et forment des sections de transition (1a, 1b) entre les têtes annulaires (2, 3) et la pièce centrale (1), qui sont plus ou moins coniques en fonction du degré d'étirage de la pièce centrale (1).

4. Manchon de calibrage selon l'une quelconque des revendications 1 à 3,
**caractérisé en ce que**
les bandes flexibles (6, 10) s'étendent sur toute la longueur de la pièce centrale (1).

5. Manchon de calibrage selon l'une quelconque des revendications 1 à 4,
**caractérisé en ce que**
les bandes flexibles (6, 10) sont résistantes à la traction.

6. Manchon de calibrage selon l'une quelconque des revendications 1 à 5,
**caractérisé en ce que**
l'angle d'inclinaison des bandes (6, 10) par rapport à l'axe central du manchon de calibrage peut être ajusté en fonction du degré d'étirage de la pièce centrale (1) entre 30° et 75°.

7. Manchon de calibrage selon l'une quelconque des revendications 1 à 6,
**caractérisé en ce que**
la somme des largeurs des bandes (6) dans la région de raccordement (7, 8) des têtes annulaires (2, 3) représente 40% à 60% du périmètre de cette région de raccordement (7, 8).

8. Manchon de calibrage selon l'une quelconque des revendications 1 à 7,
**caractérisé en ce que**
des éléments de guidage (13) sont montés sur au moins une rangée d'articulations (12) entre les bandes qui se croisent (6, 10), qui se situent dans un plan axial du manchon de calibrage, lesquels éléments de guidage sont montés de manière déplaçable dans un guide axial (14).

9. Manchon de calibrage selon l'une quelconque des revendications 1 à 8,
**caractérisé en ce que**
l'on utilise un dispositif d'étirage en longueur (4) entre les têtes annulaires (2, 3).

10. Manchon de calibrage selon l'une quelconque des revendications 1 à 9,
**caractérisé en ce que**
l'on associe un dispositif de support (2, 3) réglable en hauteur entre les têtes annulaires (2,3) à la pièce centrale étirable (1) du manchon de calibrage.
